(19) Europäisches Patentamt

European Patent Office

Office européen des brevets

(11) **EP 1 442 943 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(51) Int Cl.:
*B60R 21/01* *(2006.01)*    *B60R 21/34* *(2006.01)*
*B60R 19/48* *(2006.01)*

(21) Anmeldenummer: **03027824.6**

(22) Anmeldetag: **03.12.2003**

(54) **Fussgängerschutzsystem und Verfahren zum Aktivieren eines Fussgängerschutzsystems in Abhängigkeit eines Aufpralls**

Pedestrian protection system and method of activation of such a system according to the impact

Système de protection pour piétons et méthode de déclenchement d'un tel système selon l'impact

(84) Benannte Vertragsstaaten:
**DE FR GB**

(30) Priorität: **05.12.2002 DE 10256956**

(43) Veröffentlichungstag der Anmeldung:
**04.08.2004 Patentblatt 2004/32**

(73) Patentinhaber:
• **Siemens Restraint Systems GmbH**
**63755 Alzenau (DE)**
• **Benteler Automobiltechnik GmbH**
**33104 Paderborn (DE)**
• **PEGUFORM GMBH**
**79268 Bötzingen (DE)**

(72) Erfinder:
• **Kretschmar, Albrecht**
**65618 Niederselters (DE)**

• **Fischer, Jochem**
**73760 Ostfildern (DE)**
• **Heiser, Markus**
**63755 Alzenau (DE)**
• **Böheim, Johannes**
**79268 Bötzingen (DE)**

(74) Vertreter: **Fink, Stefan D.**
**Patentanwaltskanzlei Fink,**
**Wendl-Dietrich-Strasse 14**
**80634 München (DE)**

(56) Entgegenhaltungen:
**EP-A- 1 350 683          WO-A-97/18108**
**DE-A- 10 045 698**

**Beschreibung**

Die Erfindung betrifft ein Fußgängerschutzsystem mit mehreren an einem Fahrzeug angeordneten Sensoren zum Erfassen einer durch einen Aufprall eines Objekts auf das Fahrzeug bewirkten Deformation und Mitteln zum Auswerten der von den Sensoren gelieferten Signale, so dass Informationen über die Charakteristik des Aufpralls geliefert werden können.

Die Erfindung betrifft weiterhin ein Verfahren zum Aktivieren eines Fußgängerschutzes in Abhängigkeit eines Aufpralls, bei dem mehrere an einem Fahrzeug angeordnete Sensoren zum Erfassen einer durch einen Aufprall eines Objekts auf das Fahrzeug bewirkten Deformation verwendet werden und aus von den Sensoren gelieferten Signalen Informationen über die Charakteristik des Aufpralls geliefert werden.

Derartige Systeme und Verfahren dienen dem Fußgängerschutz im Straßenverkehr. Kommt es zu einem Zusammenstoß zwischen einem Fahrzeug und einem Fußgänger, so zieht dies in vielen Fällen schwerwiegende Verletzungen des Fußgänger nach sich, die mitunter tödlich sein können. Grundsätzlich müssen daher Zusammenstöße von Fußgängern und Fahrzeugen vermieden werden. Dies stellt sowohl Anforderungen an das Verhalten von Fußgängern im Straßenverkehr, das Fahrverhalten von Fahrzeugführern als auch an die Entwicklungsrichtung von Fußgängerschutzsystemen.

Aber auch wenn derzeit die Unfallzahlen im Straßenverkehr vielfach rückläufig sind, was insbesondere auch der sich weiterentwickelnden Sicherheitstechnik zu verdanken ist, ändert dies nichts an der Gefahr für einen Fußgänger, falls es trotz größter Vorsicht und hochentwickelter Sicherheitstechnik dennoch zu einem Zusammenstoß kommt. Häufig schlägt ein Fußgänger nach dem Zusammenstoß mit einem Fahrzeug mit dem Kopf auf der Motorhaube auf, wobei er sich ernsthafte Schädel- und Gehirnverletzungen zuzieht. Da im Allgemeinen und insbesondere bei modernen bauraumoptimierten Fahrzeugen nur ein sehr geringer Freiraum unter der Motorhaube vorgesehen ist, wird der Aufprall des Kopfes um so härter, da nach Deformation der Motorhaube die verbleibende kinetische Energie des Aufpralls sehr rasch von den im Motorraum angeordneten Komponenten aufgenommen wird, dabei sehr häufig von dem praktisch nicht deformierbaren Motorblock. Um dies zu vermeiden, wäre bei einer Aufprallgeschwindigkeit von beispielsweise 40 km/h ein Freiraum unter einer aus herkömmlichen Materialien gefertigten Motorhaube von etwa 70 mm erforderlich, was mit derzeitigen Fahrzeugkonzepten schwer zu realisieren ist.

Beispielsweise in der DE 100 30 465 A1 wurde bereits vorgeschlagen, Sensoren im Frontbereich des Fahrzeugs anzubringen, die in der Lage sind, einen Aufprall zu erkennen und mit hoher Wahrscheinlichkeit zu entscheiden, ob es sich um einen Fußgängeraufprall handelt. In diesem Fall werden Airbags gezündet, die den Aufprall des Kopfes des Fußgängers auf die Motorhaube verhindern beziehungsweise dämpfen.

Ein anderes System ist aus der DE 199 46 408 A1 bekannt. Durch die Verwendung von Pre-Crash-Sensoren kann der unmittelbar bevorstehende Aufprall eines Objekts vorhergesehen werden. Um zusätzlichen Freiraum unter der Motorhaube zu schaffen und so einen ausreichenden-Deformationsweg zur Verfügung zu stellen, wird die Motorhaube im hinteren Bereich angehoben.

Bei einem weiteren System, das in der EP 1 078 826 A1 offenbart ist, findet auch eine Anhebung der Motorhaube zur Dämpfung des Aufpralls statt, allerdings erst nach dem Erfassen des Kontakts zwischen dem Fahrzeug und dem Fußgänger durch an der Vorderkante der Motorhaube angeordnete Sensoren.

Die genannten Systeme bieten zusätzlichen Schutz für Fußgänger, sie sind jedoch alle auch mit Nachteilen verbunden.

Bei dem System der DE 100 30 465 A1 kann zwar mit einiger Zuverlässigkeit entschieden werden, ob das aufprallende Objekt ein Fußgänger ist, wobei jedoch in Kauf genommen werden muss, dass der Fußgänger mit einem Sensor im Stoßfänger und mit einem Sensor in der Motorhaube in Kontakt kommt. Aus der Zeitdifferenz kann dann ermittelt werden, ob es sich mit großer Wahrscheinlichkeit um einen Fußgänger handelt. Diese Zeitdifferenz geht jedoch für eine Reaktion des Systems verloren, so dass aus diesem Grund sehr schnellwirkende Mittel zur Verfügung gestellt werden müssen, beispielsweise extrem schnell zündende Airbags. Diese sind aber nicht reversibel, was von Nachteil ist.

Bei der DE 199 46 408 A1 besteht insbesondere das Problem, dass mittels Pre-Crash-Sensoren, die beispielsweise auf Radar basieren, keine ausreichende Sicherheit beim Erkennen eines bevorstehenden Aufpralls gegeben ist. Zudem sind die Systeme beim Erkennen der Art des Objekts noch sehr unzuverlässig.

Bei dem weiteren System gemäß der EP 1 078 826 A1 ist ebenfalls vorgesehen, einen Aufprall des Fußgängers auf der Motorhaube zu detektieren. Es werden allerdings keine zuverlässigen Entscheidungskriterien angeboten, um den Fußgängeraufprall beispielsweise von einem Aufprall eines sonstigen Objektes zu unterscheiden.

Bezüglich letztgenannter Problematik wurde in der US 6,212,456 B1 vorgeschlagen, eine Vielzahl von Sensoren zu verwenden, die ein druckabhängiges Ausgangssignal liefern. Die Gesamtheit der Sensoren liefert somit ein Druckmuster, was mit gespeicherten charakteristischen Druckmustern verglichen werden kann. Auf diese Weise können verschiedene Objekte voneinander unterschieden werden. Somit steht zwar ein System zur Verfügung, das mit großer Zuverlässigkeit nur dann Maßnahmen zur Dämpfung eines Aufpralls bereitstellt, wenn dies erforderlich sind, wobei allerdings ein hoher Aufwand getrieben wird, der insbesondere mit der großen Anzahl der erforderlichen Sensoren in Verbindung steht.

Bei der DE 100 45 698 A wird ein Fussgängerschutzsystem und das entsprechende Verfahren gemäss dem Oberbegriff des Anspruchs 1 bzw. 12 offenbart.

EP 1 350 683 A2, die als Stand der Technik im Sinne des Artikels 54(3) EPC anzusehen ist, offenbart eine Sensorik gemäss der Ansprüche 1 und 12 zum Aktivieren eines Insassenschutzsystems (Airbag, Gurtstraffer).

Es ist sehr wichtig für ein zuverlässiges und sicheres Arbeiten von Fußgängerschutzsystemen, dass der Aufprall eines Fußgängers von sonstigen Ereignissen unterschieden werden kann. Beispielsweise will man verhindern, dass Maßnahmen zur Dämpfung des Aufpralls ergriffen werden, wenn lediglich ein Parkrempler vorliegt, wenn ein Aufprall auf ein starres Hindernis, beispielsweise einen Baum erfolgt, wenn Kleintiere vom fahrenden Fahrzeug erfasst werden oder auch wenn ein Aufprall auf das Fahrzeug bei hoher Relativgeschwindigkeit zu dem Objekt, das heißt im Allgemeinen bei hoher Fahrzeuggeschwindigkeit erfolgt.

Wenn im Rahmen der vorliegenden Offenbarung von einem Fußgänger die Rede ist, so ist dies sehr allgemein zu verstehen. Selbstverständlich können auch Fahrradfahrer, Rollschuhfahrer oder sonstige Verkehrsteilnehmer dem stellvertretend verwendeten Begriff Fußgänger im Sinne der verbesserten Sicherheit im Straßenverkehr untergeordnet werden.

Der Erfindung liegt die Aufgabe zugrunde, ein System und ein verfahren zu schaffen, die die Nachteile des Standes der Technik beseitigen, wobei insbesondere der Aufprall eines Fußgängers zuverlässig und mit kostengünstigen Mitteln erkannt werden kann, um insbesondere zu entscheiden, ob ein Fußgängerschutz aktiviert werden soll.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung baut auf dem gattungsgemäßen System dadurch auf, dass die Mittel zum Auswerten aus der bewirkten Deformation eine Deformationsarbeit ermitteln können, dass die Mittel zum Auswerten unter Berücksichtigung von Zeitinformation, die von Sensoren erfasst wird, eine Intrusionsgeschwindigkeit des Objekts ermitteln können und dass unter Berücksichtigung der Deformationsarbeit und der Intrusionsgeschwindigkeit ein die Masse des Objekts kennzeichnender Parameter ermittelbar ist. Im Rahmen des erfindungsgemäßen Systems geht man davon aus, dass die gesamte kinetische Energie, die sich aus der Relativgeschwindigkeit von Objekt und Fahrzeug und aus der Objektmasse ergibt, in Deformationsarbeit umgewandelt wird. Kennt man diese Deformationsarbeit auf der Grundlage der Auswertung der Sensoren und weiterhin die Intrusionsgeschwindigkeit des Objekts, das heißt im Idealfall die unverminderte Geschwindigkeit im Moment des Aufpralls, so kann aus diesen Ausgangsgrößen die Masse des Objekts beziehungsweise ein die Masse des Objekts kennzeichnender Parameter ermittelt werden. Damit liegt ein zuverlässiges Kriterium vor, auf dessen Grundlage das Auslösen eines Fußgängerschutzes gestattet oder verhindert werden kann.

Das erfindungsgemäße Fußgängerschutzsystem ist insbesondere dadurch vorteilhaft, dass die Mittel zum Auswerten die Deformationsarbeit auf der Grundlage einer gespeicherten Tabelle und/oder einer Berechnung ermitteln. Die Tabelle oder Berechnung stellt unterschiedliche Deformationsmuster mit der im Fahrzeug deponierten Deformationsarbeit in Beziehung, so dass in Kenntnis des Deformationsmusters die Deformationsarbeit als eine der Ausgangsgrößen für die Ermittlung der Masse beziehungsweise des Massenparameters zur Verfügung steht.

Besonders nützlich ist es, dass der die Masse des Objekts kennzeichnende Parameter nach der Beziehung

$$m_0 \;=\; k \cdot \frac{W_{Def}}{v_0^2}$$

berechenbar ist, wobei

$m_0$ : Masse,
$W_{Def}$ : Deformationsarbeit,
$v_0$ : Intrusionsgeschwindigkeit, beim ersten Kontakt zu einem Zeitpunkt $t_0$,
$k$ : Konstante.

Diese Beziehung ergibt sich aus der Energiebilanz des Aufpralls, indem man davon ausgeht, dass die gesamte kinetische Energie des Aufpralls letztlich in Deformationsarbeit umgesetzt wird. Das Frontend ist so ausgelegt, dass diese Annahme für den Aufprall von Fußgängern in guter Näherung zutrifft.

Das erfindungsgemäße Fußgängerschutzsystem ist in besonders vorteilhafter Weise dadurch weitergebildet, dass aus dem die Masse des Objekts kennzeichnenden Parameter eine effektive Masse nach der Beziehung

$$m_{eff} = f_{dyn} \cdot m_0$$

berechenbar ist, wobei

m$_0$ :         Masse,
m$_{eff}$ :         effektive Masse,
f$_{dyn}$ :         Dynamikfaktor.

Der Dynamikfaktor ergibt sich aus der Dynamik des Signalverlaufs. Durch einen solchen Dynamikfaktor-wird beispielsweise berücksichtigt, dass die kinetische Energie nicht ausschließlich in Form von Deformationsarbeit im Fahrzeug umgesetzt wird, sondern dass beispielsweise das Bein eines Fußgängers, das auf die Sensorik aufprallt, ebenfalls eine Deformation erfährt. In diesem Sinne ist der Dynamikfaktor ein Korrekturterm, der die realen Verhältnisse beim Aufprall berücksichtigt.

Das erfindungsgemäße Fußgängerschutzsystem ist in besonders vorteilhafter weise dadurch weitergebildet, dass bei einer Masse m$_0$ beziehungsweise einer effektiven Masse m$_{eff}$ zwischen ca. 5 kg und 20 kg ein Aktivieren eines Fußgängerschutzes möglich ist und dass bei einer Masse m$_0$ beziehungsweise einer effektiven Masse m$_{eff}$ kleiner als ca. 5 kg und größer als 20 kg ein Aktivieren eines Fußgängerschutzes verhindert wird. Auf diese weise wird ein Massenfenster zur Verfügung gestellt, das nur in dem Fall das Aktivieren des Fußgängerschutzes ermöglicht, wenn mit großer Wahrscheinlichkeit der Aufprall eines Fußgängers vorliegt. Es wird verhindert, dass bei effektiven Massen unterhalb von etwa 5 kg, ein Fußgängerschutz aktiviert wird, so dass hierdurch beispielsweise das Auslösen des Fußgängerschutzes bei Zusammenstößen mit Kleintieren verhindert wird. Ebenfalls soll ein Aktivieren des Fußgängerschutzes bei effektiven Massen oberhalb von 20 kg verhindert werden. Dies hat den Vorteil, dass bei Systemen, bei denen der Fußgängerschutz im Aufstellen der Motorhaube besteht, dieses beispielsweise beim Aufprall auf eine Mauer oder auf einen Baum verhindert wird. So wird vermieden, dass die aufgestellte Motorhaube die Insassen des Fahrzeugs zusätzlich gefährdet, indem diese nämlich durch die Windschutzscheibe in den Fahrzeuginnenraum geschoben würde.

Ebenfalls ist es besonders nützlich, dass bei einer Intrusionsgeschwindigkeit zwischen ca. 20 km/h und 60 km/h ein Aktivieren eines Fußgängerschutzes möglich ist und dass bei einer Intrusionsgeschwindigkeit kleiner als ca. 20 km/h und größer als 60 km/h ein Aktivieren eines Fußgängerschutzes verhindert wird. Auch hierdurch wird beispielsweise bei Zusammenstößen mit niedriger Geschwindigkeit ein Auslösen des Fußgängerschutzes verhindert. Bei Zusammenstößen mit hoher Geschwindigkeit soll dies auch verhindert werden, da wiederum eine zusätzliche Gefährdung der Insassen des Kraftfahrzeugs vermieden werden soll.

Die Erfindung ist in besonders vorteilhafter Weise dadurch weitergebildet, dass Sensoren mit mehreren sensitiven Bereichen vorgesehen sind, die sich an verschiedenen Orten des Fahrzeugs, insbesondere der Fahrzeugfront, befinden. Durch die Maßnahme, dass ein Sensor mehrere sensitive Bereiche aufweist, kann die Anzahl der erforderlichen Sensoren erheblich verringert werden. Dabei nimmt man bewusst in Kauf, dass Information bezüglich des Aufprallortes zumindest teilweise verloren geht. Dies ist vor dem Hintergrund verständlich, dass in den meisten Systemen ohnehin nur eine einzige Maßnahme zur Verfügung steht, um den Aufprall zu dämpfen, sei es durch einen Airbag oder, wie vorzugsweise im Rahmen des erfindungsgemäßen Systems, durch das Anheben der Motorhaube im hinteren Bereich. Auch wenn die Information bezüglich des Aufprallortes verloren geht, so bleibt doch als wesentliche Information diejenige über die Charakteristik des Aufpralls erhalten. So kann beispielsweise der Aufprall eines Fußgängers von einem Parkrempler unterschieden werden.

Das erfindungsgemäße Fußgängerschutzsystem ist in besonders vorteilhafter Weise dadurch weitergebildet, dass die Sensoren beziehungsweise die sensitiven Bereiche der Sensoren entlang einem Stoßfänger des Fahrzeugs angeordnet sind. Auf diese Weise wird der Forderung Rechnung getragen, dass der Aufprall des Fußgängers möglichst frühzeitig erfasst wird, das heißt bei der Verwendung von Kontaktsensoren durch eine Anordnung von Sensoren möglichst weit vorne am Fahrzeug. Ein einzelner Sensor kann sich so beispielsweise über die gesamte Länge des Stoßfängers erstrecken, wobei eine Vielzahl sensitiver Bereiche zur Erfassung der Charakteristik des Aufpralls entlang der Länge des Sensors vorgesehen sind.

Es kann nützlich sein, dass die einem Sensor zugehörigen sensitiven Bereiche in regelmäßigen Abständen entlang einem Stoßfänger des Fahrzeugs angeordnet sind. Auf diese Weise kann ein Sensor den gesamten Bereich über den er sich erstreckt, mit gleichmäßiger Charakteristik abdecken.

Ebenfalls kann es nützlich sein, dass sensitive Bereiche benachbarter Sensoren zueinander versetzt beziehungsweise nebeneinander angeordnet sind, so dass beim Aufprall eines Objekts von benachbarten Sensoren Signale mit unterschiedlichen Intensitäten geliefert werden. Wären die sensitiven Bereiche benachbarter Sensoren nicht versetzt angeordnet, das heißt bei Längserstreckung der Sensoren entlang dem Stoßfänger des Fahrzeugs untereinander, so würden die Sensoren in vielen Fällen mit gleicher oder ähnlicher Deformation beaufschlagt und somit gleiche oder ähnliche Signalintensitäten liefern. Indem nun die Sensoren versetzt angeordnet werden, liefern diese im Allgemeinen unterschiedliche Signalintensitäten, die wiederum zur Ermittlung der Aufprallcharakteristik und somit zur Erkennung des Objektes verwendet werden können.

Weiterhin ist das erfindungsgemäße Fußgängerschutzsystem besonders dadurch in vorteilhafter Weise ausgebildet, dass die Sensoren optische Fasersensoren sind, an deren einem Ende Licht eingekoppelt werden kann und an deren anderem Ende die Intensität von austretendem Licht gemessen werden kann, dass die sensitiven Bereiche der Sensoren durch Veränderung der Oberfläche der optischen Fasersensoren geschaffen sind und dass in Abhängigkeit der Deformation der sensitiven Bereiche mehr oder weniger Licht aus den sensitiven Bereichen ausgekoppelt werden kann, so dass die gemessene Intensität von austretendem Licht als Maß für die Deformation der sensitiven Bereiche verwendet werden kann. Derartige Sensoren, beispielsweise aus Polymethylmethacrylat, eignen sich aus mehreren Gründen besonders für die Realisierung der vorliegenden Erfindung. Die optischen Fasersensoren sind flexibel, sie haben ein geringes Gewicht, eine große mechanische Belastbarkeit, und sind temperaturunempfindlich. Weiterhin gibt es keine Probleme im Hinblick auf die elektromagnetische Verträglichkeit. Die optischen Fasersensoren sind vorzugsweise in einem Matrixmaterial eingebettet. Bei nicht gebogenem Fasersensor tritt aus dem sensitiven Bereich eine bestimmte Lichtmenge aus, die aus den geometrischen Verhältnissen resultiert. Wird der Sensor gebogen, so kann dies zu einer Beeinflussung der austretenden Lichtintensität führen, was sich im Wesentlichen aus den Gesetzen der geometrischen Optik ergibt.

Die Erfindung baut auf dem gattungsgemäßen Verfahren dadurch auf, dass eine Deformationsarbeit ermittelt wird, dass unter Berücksichtigung von Zeitinformation, die von Sensoren erfasst wird, eine Intrusionsgeschwindigkeit des Objekts ermittelt wird und dass unter Berücksichtigung der Deformationsarbeit und der Intrusionsgeschwindigkeit ein die Masse des Objekts kennzeichnender Parameter ermittelt wird. Auf diese Weise werden die Vorteile und Besonderheiten des erfindungsgemäßen Systems auch im Rahmen eines Verfahrens umgesetzt. Dies gilt auch für die nachfolgend angegebenen besonders bevorzugten Ausführungsformen des erfindungsgemäßen Verfahrens.

Das erfindungsgemäße Verfahren ist insbesondere dadurch vorteilhaft, dass das Ermitteln der Deformationsarbeit auf der Grundlage einer gespeicherten Tabelle und/oder Berechnung erfolgt.

Besonders nützlich ist es, dass der die Masse des Objekts kennzeichnende Parameter nach der Beziehung

$$m_0 \;=\; k \,\cdot\, \frac{W_{Def}}{v_0^2}$$

berechnet wird, wobei

$m_0$ :      Masse,
$W_{Def}$ :      Deformationsarbeit,
$v_0$ :      Intrusionsgeschwindigkeit, beim ersten Kontakt zu einem Zeitpunkt $t_0$.
$k$ :      Konstante.

Es ist besonders zu bevorzugen, dass aus dem die Masse des Objekts kennzeichnenden Parameter eine effektive Masse nach der Beziehung

$$m_{eff} \;=\; f_{dyn} \,\cdot\, m_0$$

berechnet wird, wobei

$m_0$ :      Masse,
$m_{eff}$ :      effektive Masse,
$f_{dyn}$ :      Dynamikfaktor.

Das erfindungsgemäße Verfahren ist in besonders vorteilhafter Weise dadurch weitergebildet, dass bei einer Masse $m_0$ beziehungsweise einer effektiven Masse $m_{eff}$ zwischen -ca. 5 kg und 20 kg ein Aktivieren eines Fußgängerschutzes möglich ist und dass bei einer Masse $m_0$ beziehungsweise einer effektiven Masse $m_{eff}$ kleiner als ca. 5 kg und größer als 20 kg ein Aktivieren eines Fußgängerschutzes verhindert wird.

Ebenfalls ist es besonders nützlich, dass bei einer Intrusionsgeschwindigkeit zwischen ca. 20 km/h und 60 km/h ein Aktivieren eines Fußgängerschutzes möglich ist und dass bei einer Intrusionsgeschwindigkeit kleiner als ca. 20 km/h und größer als 60 km/h ein Aktivieren eines Fußgängerschutzes verhindert wird.

Die Erfindung ist in besonders vorteilhafter weise dadurch weitergebildet, dass Sensoren mit mehreren sensitiven Bereichen verwendet werden, die sich an verschiedenen Orten des Fahrzeugs, insbesondere der Fahrzeugfront, befinden.

Das erfindungsgemäße Verfahren ist in besonders vorteilhafter Weise dadurch weitergebildet, dass die Sensoren beziehungsweise die sensitiven Bereiche der Sensoren entlang einem Stoßfänger des Fahrzeugs angeordnet sind.

Es ist vorteilhaft, dass die einem Sensor zugehörigen sensitiven Bereiche in regelmäßigen Abständen entlang einem Stoßfänger des Fahrzeugs angeordnet sind.

Bei dem erfindungsgemäßen Verfahren ist es besonders bevorzugt, dass sensitive Bereiche benachbarter Sensoren zueinander versetzt beziehungsweise nebeneinander angeordnet sind, so dass beim Aufprall eines Objekts von benachbarten Sensoren Signale mit unterschiedlichen Intensitäten geliefert werden.

Weiterhin ist das erfindungsgemäße Verfahren besonders dadurch in vorteilhafter Weise ausgebildet, dass die Sensoren optische Fasersensoren sind, an deren einem Ende Licht eingekoppelt wird und an deren anderem Ende die Intensität von austretendem Licht gemessen wird, dass die sensitiven Bereiche der Sensoren durch Veränderung der Oberfläche der optischen Fasersensoren geschaffen sind und dass in Abhängigkeit der Deformation der sensitiven Bereiche mehr oder weniger Licht aus den sensitiven Bereichen ausgekoppelt werden kann, so dass die gemessene Intensität von austretendem Licht als Maß für die Deformation der sensitiven Bereiche verwendet wird.

Der Erfindung liegt die Erkenntnis zugrunde, dass über die Bestimmung der Deformation bei einem Aufprall und die Erfassung von Zeitinformation eine Massenbestimmung möglich ist, die letztlich als Entscheidungskriterium für ein Auslösen eines Fußgängerschutzes herangezogen werden kann.

Die Erfindung wird nun unter Bezugnahme auf die beigefügten Zeichnungen anhand bevorzugter Ausführungsformen beispielhaft erläutert.

Es zeigen:

Figur 1     einen Abschnitt eines Kraftfahrzeugs mit einem erfindungsgemäßen System;

Figur 2     eine schematische Darstellung eines Objekts vor dem Aufprall auf ein Fahrzeug;

Figur 3     eine schematische Darstellung eines Objekts nach dem Aufprall auf ein Fahrzeug;

Figur 4     eine schematische Darstellung eines weiteren Objekts nach dem Aufprall auf ein Fahrzeug;

Figur 5     ein Flussdiagramm zur Erläuterung eines erfindungsgemäßen Verfahrens;

Figur 6     eine Kontaktsensoranordnung und ein eindringendes Objekt;

Figur 7     drei Beispiele von Kontaktsensoranordnungen mit mehreren sensitiven beziehungsweise aktiven Bereichen;

Figur 8     eine Draufsicht auf das vordere Ende eines Kraftfahrzeugs zur Erläuterung der Anordnung von Sensoren;

Figur 9     eine geschnittene Seitenansicht eines vorderen Bereiches eines Kraftfahrzeugs zur Erläuterung der Bereitstellung einer Verformbarkeit;

Figur 10    eine geschnittene Seitenansicht eines vorderen Bereiches eines Kraftfahrzeugs zur Erläuterung einer weiteren Möglichkeit zur Bereitstellung einer Verformbarkeit;

Figur 11    einen Ausschnitt aus einem optischen Fasersensor mit einem sensitiven Bereich in drei verschiedenen Zuständen;

Figur 12    eine Anordnung optischer Fasersensoren mit Lichtquelle und Detektoren; und

Figur 13    ein Blockdiagramm zur Erläuterung des Systemaufbaus.

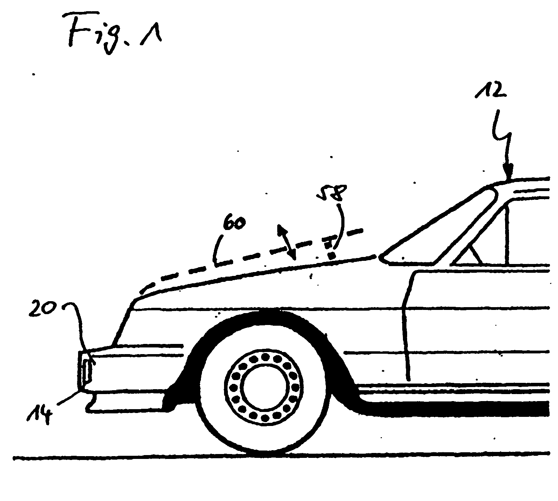

Figur 1 zeigt einen Abschnitt eines Kraftfahrzeugs mit einem erfindungsgemäßen System. Ein Kraftfahrzeug 12 mit einem Stoßfänger 20 und einer Motorhaube 60 ist dargestellt. Die Motorhaube 60 ist einmal mit durchgezogener Linie im geschlossenen Zustand dargestellt und weiterhin im angehobenen Zustand durch eine unterbrochene Linie. Dieses Anheben der Motorhaube 60 soll im Falle eines Zusammenstoßes mit einem Fußgänger erfolgen, damit auf diese Weise zusätzlicher freiraum unter der Motorhaube geschaffen wird, so dass durch hierdurch entstehenden Deformationsweg der Aufprall des Fußgängers auf der Motorhaube 60 gedämpft wird. Das Anheben wird durch einen im Bereich der Anhebemechanik 58 angeordneten nicht dargestellten Aktuator bewirkt. Um den Aufprall des Fußgängers frühzeitig zu erkennen, sind am vorderen Ende des Stoßfängers 20 Sensoren 14 angeordnet. Diese erstrecken sich vorzugsweise über die gesamte Breite des Kraftfahrzeugs 12, das heißt über die Länge der Stoßstange 20, um einen Fußgängeraufprall an all diesen Stellen erfassen zu können.

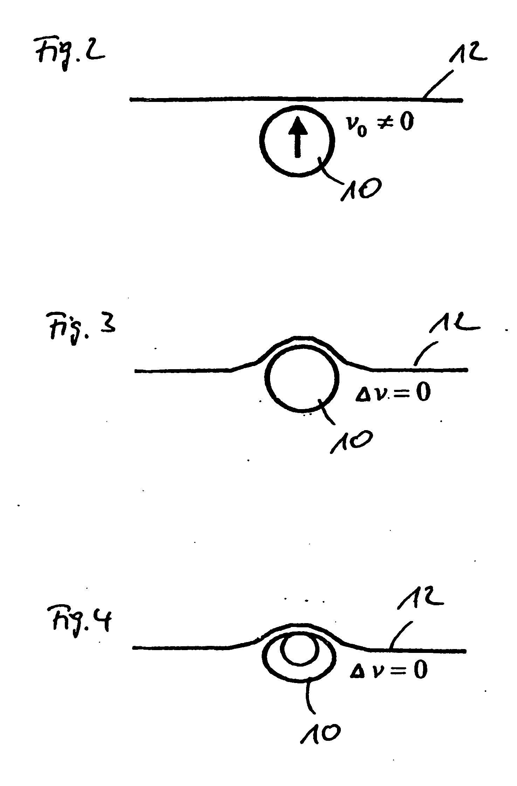

Figur 2 zeigt eine schematische Darstellung eines Objekts 10 vor dem Aufprall auf ein Fahrzeug 12. Da sich das Objekt 10 vor dem Aufprall auf das Fahrzeug 12 befindet, liegt eine Relativgeschwindigkeit $v_0 \neq 0$ vor, die im Moment des Aufpralls die Intrusionsgeschwindigkeit des Objekts 10 in das Fahrzeug 12 sein wird. Bei einem Objekt mit der Masse $m_0$ liegt somit eine kinetische Energie $E_{kin}$

$$E_{kin} = 0{,}5 \cdot m_0 \cdot v_0^2$$

vor.

Figur 3 zeigt eine schematische Darstellung eines Objekts 10 nach dem Aufprall auf ein Fahrzeug 12. Nach dem Aufprall des Objekts 10 auf das Fahrzeug 12 kann in guter Näherung davon ausgegangen werden, dass bei $\Delta v = 0$ die gesamte kinetische Energie in Deformationsarbeit $W_{Def}$ umgesetzt wird. Aus der Energiebilanz ergibt sich somit

$$m_0 = 2 \cdot \frac{W_{Def}}{v_0^2},$$

das heißt in verallgemeinerter Form eine lineare Beziehung zwischen einem Massenparameter $m_0$ und dem Quotienten aus der Deformationsarbeit $W_{Def}$ und dem Quadrat der Intrusionsgeschwindigkeit $v_0^2$:

$$m_0 = k \cdot \frac{W_{Def}}{v_0^2},$$

wobei k eine Konstante ist.

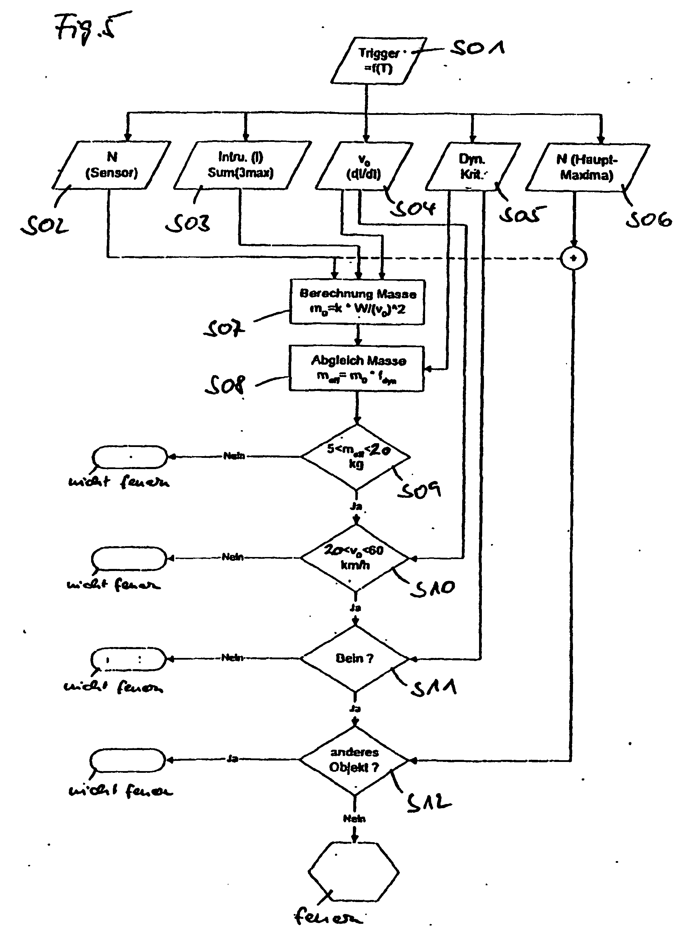

Figur 4 zeigt eine schematische Darstellung eines weiteren Objekts 10 nach dem Aufprall auf ein Fahrzeug 12. Bei dem hier dargestellten Objekt 10 kann es sich beispielsweise um das deformierbare Bein eines Fußgängers handeln. Geht man von einer solchen Deformierbarkeit des Objekts 10 aus, so setzt sich die Deformationsarbeit aus der im Fahrzeug 12 deponierten Deformationsarbeit und der im Bein 10 deponierten Deformationsarbeit zusammen, das heißt:

$$W_{Def} = W_{Def / Fahrzeug} + W_{Def / Fußgänger}.$$

In guter Näherung kann auf der Grundlage diese Beziehung eine effektive Masse $m_{eff}$ über einen Dynamikfaktor definiert werden, so dass

$$m_{eff} = f_{dyn} \cdot m_0.$$

Figur 5 zeigt ein Flussdiagramm zur Erläuterung eines erfindungsgemäßen Verfahrens. Nach einem Triggersignal, das in Schritt S01 aufgrund eines Aufpralls eines Objekts erzeugt wird, werden in den Schritten S02, S03, S04, S05 und S06 unterschiedliche Messwerte erfasst. In Schritt S02 wird die Anzahl der ansprechenden Sensoren erfasst. In Schritt S03 wird die Intrusionslänge auf der Grundlage einer Summation von drei Signalmaxima bestimmt. In Schritt S04 wird auf der Grundlage einer Zeitinformation die Intrusionsgeschwindigkeit ermittelt. Dynamische Besonderheiten des Aufpralls werden in Schritt S05 erfasst, insbesondere das Deformationsverhalten des aufprallenden Objekts. In Schritt S06 wird die Anzahl der Hauptmaxima der von den Sensoren erfassten Signale bestimmt.

Ausgehend von den in den Schritten S02, S03 und S04 bestimmten Parametern wird in Schritt S07 die Masse $m_0$ gemäß der Beziehung

$$m_0 \; = \; k \; \cdot \; \frac{W_{Def}}{v_0^2}$$

ermittelt.

Ausgehend von diesem Berechungsergebnis wird in Schritt S08 unter weiterer Berücksichtigung der dynamischen Kriterien aus Schritt S05 die effektive Masse $m_{eff}$ gemäß der Beziehung

$$m_{eff} \; = \; f_{dyn} \; \cdot \; m_0$$

ermittelt. Dieser effektive Massenparameter wird im weiteren Ablauf des Verfahrens verwendet. Ebenso ist es aber auch möglich, ohne Abgleich der Masse unter Berücksichtigung dynamischer Kriterien die direkt in Schritt S07 bestimmte Masse $m_0$ als Kriterium bei den nachfolgenden Entscheidungen zu verwenden.

In Schritt S09 wird bestimmt, ob die effektive Masse $m_{eff}$ in einem Massenfenster zwischen 5 kg und 20 kg liegt. Ist dies nicht der Fall, so wird entschieden, dass ein Fußgängerschutz nicht aktiviert wird ("nicht feuern").

Liegt hingegen die effektive Masse in dem vorgegebenen Intervall, so wird in Schritt S10 bestimmt, ob die Intrusionsgeschwindigkeit in einem vorgegebenen Geschwindigkeitsfenster zwischen 20 km/h und 60 km/h liegt. Ist die Intrusionsgeschwindigkeit kleiner als 20 km/h beziehungsweise größer als 60 km/h, so wird der Fußgängerschutz nicht aktiviert.

Liegt die Intrusionsgeschwindigkeit innerhalb des vorgegebenen Geschwindigkeitsfensters, so kann in Schritt S11 noch geprüft werden, ob es sich unter Berücksichtigung der aus Schritt S05 bereitgestellten dynamischen Kriterien mit großer Wahrscheinlichkeit beispielsweise um ein Bein handelt. Handelt es sich nicht um ein Bein, so kann der Fußgängerschutz, eventuell bei einem Rollstuhl nicht ausgelöst werden. Wird in Schritt S11 bestimmt, dass der Aufprall durch ein Bein bewirkt wurde, so kann zu Schritt S12 übergegangen werden. Die spezielle Auswertung in Schritt S11 kann bei fein abgestimmten Systemen eine zusätzliche Information bieten, wobei jedoch grundsätzlich eine Entscheidung allein auf der Grundlage des Massenparameters und der Intrusionsgeschwindigkeit in den meisten Fällen ausreichend ist.

Im Anschluss an eine positive Entscheidung aus Schritt S11 wird in Schritt S12 noch auf der Grundlage eines Vergleichs der Sensoranzahl aus Schritt S02 und der Anzahl der Hauptmaxima S06 ermittelt, ob der Aufprall mit großer Wahrscheinlichkeit durch ein anderes Objekt als durch das vorgegebene Objekt, beispielsweise durch ein Bein, bewirkt wurde. Wurde der Aufprall durch ein anderes Objekt bewirkt, so wird das Fußgängerschutzsystem nicht aktiviert. Wird jedoch ermittelt, dass es sich mit großer Wahrscheinlichkeit nicht um ein anderes Objekt handelt, so wird der Fußgängerschutz aktiviert.

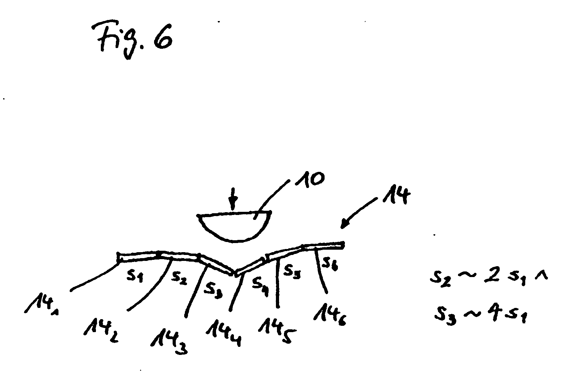

Figur 6 zeigt eine Kontaktsensoranordnung und ein eindringendes Objekt. Ein Objekt 10 kann beim Aufprall auf die Sensoren 14 eine bestimmte Deformation der Sensoren 14 bewirken, die in charakteristischer Weise von der Form des Objektes 10 abhängt. Die Sensoren $14_1$, $14_2$, $14_3$, $14_4$, $14_5$, $14_6$ werden in unterschiedlicher Weise durch den Aufprall des Objekts 10 deformiert, so dass diese auch unterschiedliche Signalintensitäten $s_1$, $s_2$, $s_3$, $s_4$, $s_5$ und $s_6$ liefern. Legt man die Sensoren 14 so aus, dass sie bei größerer Verformung eine größere Signalintensität liefern, so kann im vorliegenden graphisch dargestellten Beispiel gelten, dass die Signalintensität $s_2$ des Sensors $14_2$ in etwa n mal so groß ist wie die Signalintensität $s_1$ des Sensors $14_1$. Zusätzlich gilt, dass die Signalintensität $s_3$ des Sensors $14_3$ in etwa m mal so groß ist wie die Signalintensität $s_1$ des Sensors $14_1$, wobei n und m bekannte Faktoren sind, beispielsweise 2 und 4. Gleiches gilt für die Beziehung der Signalintensitäten $s_4$, $s_5$, $s_6$ der Sensoren $14_4$, $14_5$, $14_6$. Somit liegt in diesem vereinfachten Beispiel eine charakteristische Beziehung zwischen den Signalintensitäten vor, die ebenso charakteristisch für eine bestimmte Objektart sein kann, beispielsweise das Bein eines Fußgängers.

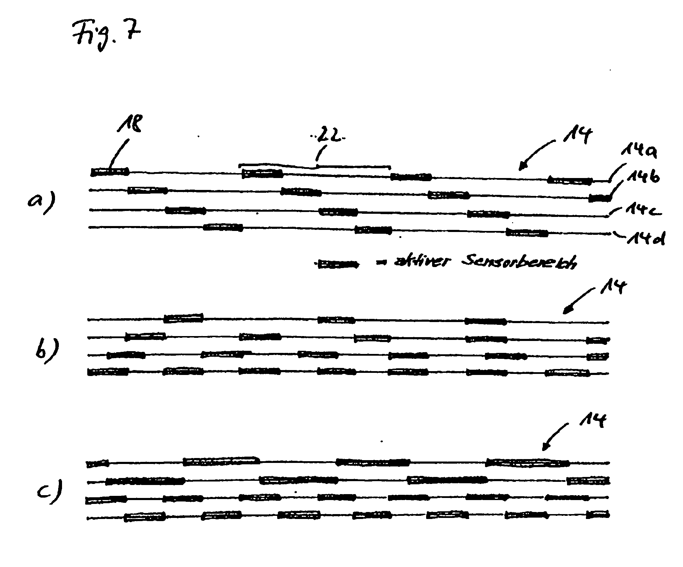

Figur 7 zeigt drei Beispiele von Kontaktsensoranordnungen mit mehreren sensitiven beziehungsweise aktiven Bereichen. Es sind Ausschnitte von Sensoren dargestellt, die beispielsweise entlang dem Stoßfänger eines Kraftfahrzeugs angeordnet sein können. Der Blick in Figur 7 ist von vorne auf den Stoßfänger gerichtet. Die einzelnen Sensoren 14a, 14b, 14c, 14d können eine andere Länge aufweisen als dargestellt. Ebenfalls kann eine andere Anzahl an Einzelsensoren 14a, 14b, 14c, 14d als dargestellt vorliegen. Jeder einzelne Sensor 14 hat mehrere aktive Sensorbereiche 18. Beispielsweise können 30 solcher aktiven beziehungsweise sensitiven Sensorbereiche 18 pro-Sensor 14 vorgesehen sein.

In Figur 7a ist eine Anordnung dargestellt, bei der sich die sensitiven Bereiche 18 regelmäßig entlang den Sensoren 14 wiederholen. Weiterhin kann man Sensoranordnungen 22 über die verschiedenen Sensoren definieren, die sich ebenfalls regelmäßig wiederholen. Bei diesem Beispiel wird ein Objekt, das in bestimmter Weise bezüglich irgendeiner der sich wiederholenden Sensoranordnungen 22 auftrifft, stets dasselbe Signalmuster erzeugen. Das Signalmuster gibt also keine Information darüber, welche der sich wiederholenden Anordnungen 22 getroffen wurde. Es wird jedoch die Information über die Charakteristik des Aufpralls erfasst.

In Figur 7b sind die sensitiven Bereiche 18 ebenfalls regelmäßig über die einzelnen Sensoren 14 verteilt. Allerdings sind die Abstände der sensitiven Bereiche 18 auf den einzelnen Sensoren unterschiedlich. Somit würde eine solche Sensoranordnung beim Auftreffen eines Objekts andere Intensitätsmuster liefern, als beim Auftreffen des Objekts auf eine Sensoranordnung gemäß Figur 7, wobei durch geschickte Anordnung der sensitiven Bereiche 18 unterschiedliche Informationen über die Charakteristik des Aufpralls erhalten werden können.

Figur 7c zeigt noch eine andere Variante der Anordnung sensitiver Bereiche 18 auf den Sensoren 14, wobei hier besonders zu erwähnen ist, dass sensitive Bereiche 18 mit unterschiedlichen Ausdehnungen vorgesehen sind.

Neben den in Figur 7 angegebenen Anordnungen von Sensoren 14 und sensitiven Bereichen 18 der Sensoren sind zahlreiche weitere Möglichkeiten denkbar, die unterschiedliche Vorteile mit sich bringen können. Beispielsweise ist es möglich, dass die Sensoren 14 nicht geradlinig angeordnet sind, so dass auf diese Weise die sensitiven Bereiche 18 der Sensoren nebeneinander, das heißt in derselben Höhe liegen können.

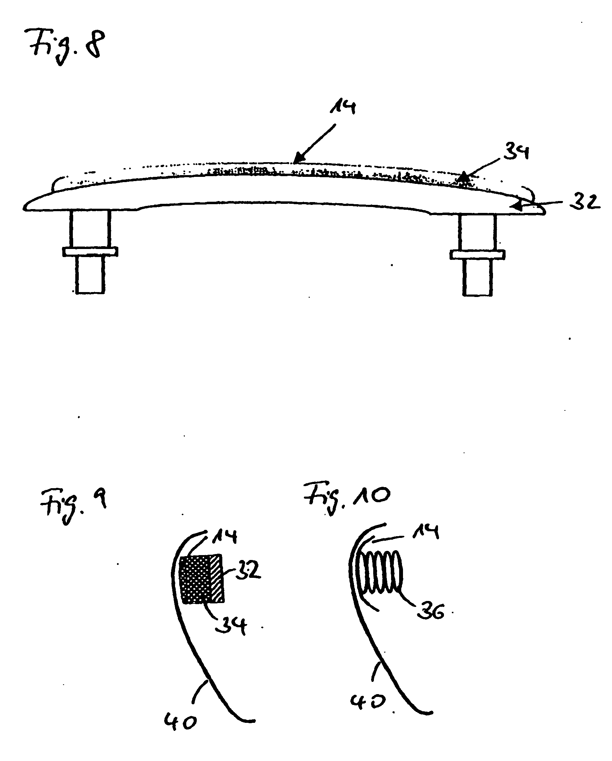

Figur 8 zeigt eine Draufsicht auf das vordere Ende eines Kraftfahrzeugs zur Erläuterung der Anordnung von Sensoren 14.

Auf einem Querträger 32 ist ein elastischer Schaum 34 angeordnet. Dieser Schaum 34 hat beispielsweise eine Dicke von 60 bis 70 mm. Auf dem Schaum 34 folgen als nächste Schicht die optischen Fasersensoren 14. Diese können beispielsweise auf einem Stahlband angeordnet sein, so dass insgesamt eine Dicke der Sensorschicht von beispielsweise 1,5 bis 2 mm vorliegt. Auf die optischen Fasersensoren 14 kann noch eine Kunststoffaußenhaut folgen, die in der vorliegenden Darstellung nicht gezeigt ist und eine Dicke von beispielsweise 2 bis 3 mm aufweisen kann.

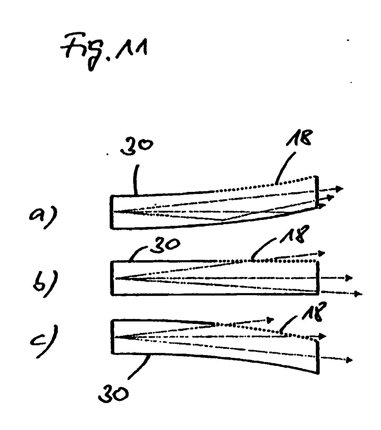

Figur 9 zeigt eine geschnittene Seitenansicht eines vorderen Endes eines Kraftfahrzeugs zur Erläuterung der Bereitstellung einer Verformbarkeit. Es ist eine Möglichkeit dargestellt, wie der für die Deformation benötigte Deformationsweg zur Verfügung gestellt werden kann, indem nämlich der optische Sensorbereich 14 auf einer auf einem Träger 32 angeordneten Schaumschicht 34, die für den Schutz des Beines notwendig ist, montiert ist. Über den optischen Sensoren 14 befindet sich eine Kunststoffschicht 40.

Figur 10 zeigt eine geschnittene Seitenansicht eines vorderen Bereiches eines Kraftfahrzeugs zur Erläuterung einer weiteren Möglichkeit zur Bereitstellung einer Verformbarkeit. Hier ist eine andere Möglichkeit der Anordnung der optischen Sensoren 14 im Fahrzeug dargestellt. Es ist ebenfalls wieder eine Kunststoffschicht 40 als Außenhaut vorgesehen. Darunter befinden sich die Sensoren 14 auf einer Crash-Box 36. Die Crash-Box stellt bis zu einer gewissen auf sie ausgeübten Kraft ein elastisches Deformationsverhalten zur Verfügung, so dass auf der Grundlage der Deformation der optischen Sensoren 14 eine Detektion erfolgen kann.

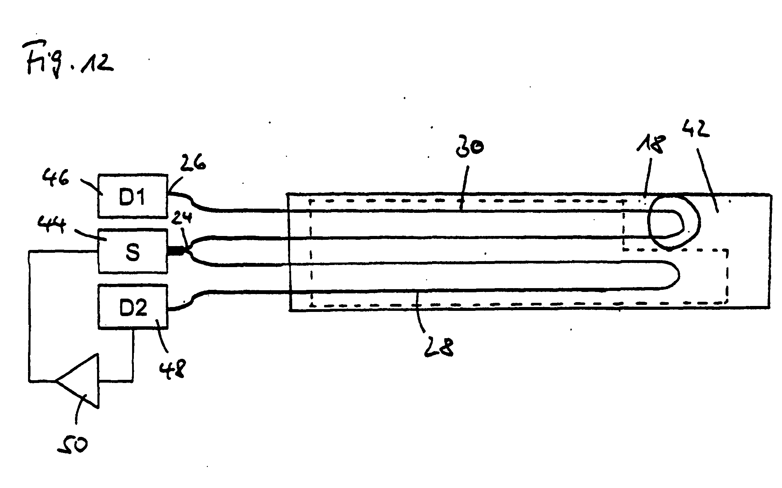

Figur 11 zeigt einen Ausschnitt aus einem optischen Fasersensor 30 mit einem sensitiven Bereich in drei verschiedenen Zuständen a, b und c. Der optische Fasersensor 30 hat einen sensitiven Bereich 18, der durch Oberflächenbehandlung zur Verfügung gestellt werden kann. Durch die Bereitstellung eines solchen sensitiven Bereiches 18 kann die aus dem optischen Fasersensor 30 austretende Lichtintensität in diesem sensitiven Bereich 18 verändert werden. Dies hat zur Folge, dass die austretende Lichtintensität vom Deformationszustand des Fasersensors 30 abhängt. Bei dem Deformationszustand gemäß Figur 11a wird die aus dem sensitiven Bereich 18 austretende Lichtintensität 18 im Vergleich zum nicht deformierten Zustand gemäß Figur 11b erniedrigt. Im Gegensatz hierzu wird bei dem Beispiel gemäß Figur 11c die aus dem sensitiven Bereich 18 austretende Lichtintensität im vergleich zu dem nicht deformierten Zustand gemäß Figur 11b erhöht.

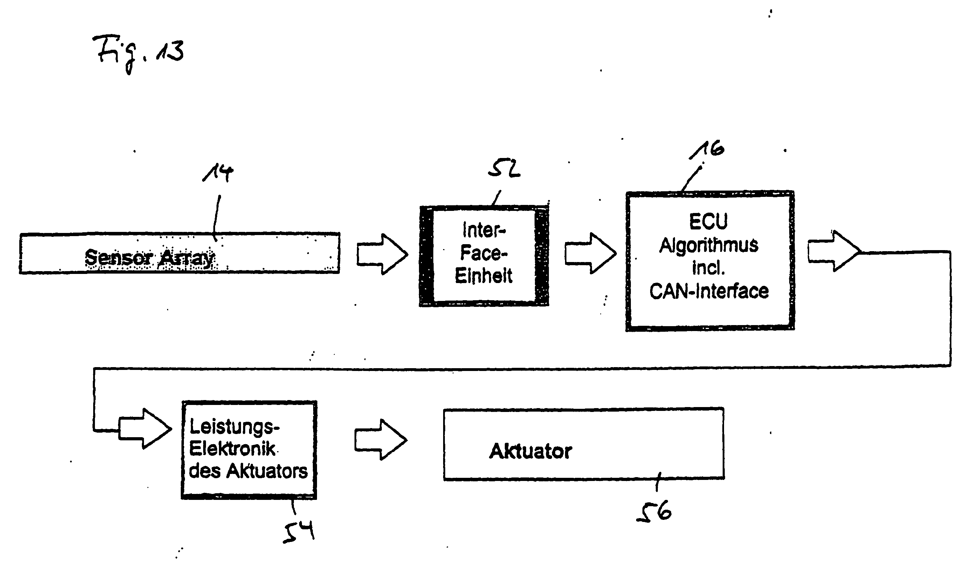

Figur 12 zeigt eine Anordnung optischer Fasersensoren mit Lichtquelle 44 und Detektoren 46, 48. In einem Trägermaterial 42 sind zwei optische Fasersensoren 28, 30 angeordnet. Der optische Fasersensor 28 ist nicht mit einem sensitiven Bereich ausgestattet, während der optische Fasersensor 30 mit einem sensitiven Bereich 18 versehen ist; dies ist durch die unterbrochene Linie im Trägermaterial 42 angedeutet. Koppelt man nun Licht aus einer Lichtquelle 44 an einem Ende 24 des optischen Fasersensors 30 ein, so wird das Licht durch den optischen Fasersensor 30 geleitet, und es gelangt schließlich mit einer verbleibenden Intensität zum anderen Ende 26 des optischen Fasersensors 30. Dort kann von einem Detektor 46 die Lichtintensität gemessen werden. Wird nun der sensitive Bereich 18 des optischen Fasersensors 30 deformiert, so hat dies einen Einfluss auf die in diesem Bereich austretende Lichtintensität und somit auch auf die von dem Detektor 46 bei gegebener eingekoppelter Lichtintensität aus der Lichtquelle 44 nachgewiesene Intensität. Um zuverlässige Messergebnisse zur Verfügung zu stellen, ist es möglich, parallel zu dem optischen Fasersensor 30 einen weiteren optischen Fasersensor 28 anzuordnen, wobei dieser jedoch keinen sensitiven Bereich aufweist. Koppelt man in diesen optischen Leiter 28 Licht aus derselben Lichtquelle 44 ein, die auch für den optischen Fasersensor 30 verwendet wird, so kann das von dem Detektor 48 ausgegebene Intensitätssignal über eine entsprechende elektronische Schaltung, die hier durch einen Verstärker 50 symbolisiert ist, als Eingangssignal für die Lichtquelle 44 und somit zur Darstellung einer Bezugsschaltung verwendet werden. Somit können beispielsweise Schwankungen der von der Lichtquelle 44 abgegebenen Intensität kompensiert werden.

Figur 13 zeigt ein Blockdiagramm zur Erläuterung des Systemaufbaus. Das erfindungsgemäße System ordnet sich in der Weise in ein Gesamtkonzept ein, dass die Sensoranordnung 14 über eine Schnittstelleneinrichtung 52 mit einer elektronischen Steuereinheit 16 kommuniziert. Diese elektronische Steuereinheit 16 kann eine CAN-Schnittstelle umfassen, so dass von der elektronischen Steuereinheit 16 zusätzliche auf dem CAN-Bus zur Verfügung stehende Informationen verarbeitet werden können. Ebenfalls können dem CAN-Bus auf diese Weise von der Sensoranordnung 14 erfasste Informationen eingegeben werden. Die elektronische Steuereinheit 14 steuert eine Leistungselektronik 54 an, die in Abhängigkeit der von der Sensoranordnung 14 erfassten Informationen einen Aktuator 56 betätigen kann. Dieser kann dann im Falle eines Fußgängeraufpralls das in Figur 1 dargestellte Aufstellen der Motorhaube bewirken.

Die Erfindung lässt sich wie folgt zusammenfassen: Bei einem Fußgängerschutzsystem wird auf der Grundlage einer von Sensoren erfassten Deformation und der daraus ermittelten Deformationsarbeit sowie der ebenfalls durch die Sensoren ermittelten Intrusionsgeschwindigkeit eine Masse beziehungsweise ein die Masse eines Objekts kennzeichnender Parameter bestimmt. Diese Masse wird, vorzugsweise neben der Intrusionsgeschwindigkeit selbst und weiterer Größen, als Entscheidungskriterium dafür verwendet, ob ein Fußgängerschutz aktiviert werden darf oder ob die Aktivierung des Fußgängerschutzes unterbunden werden muss.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Patentansprüche**

1.  Fußgängerschutzsystem mit

    - mehreren an einem Fahrzeug (12) angeordneten Sensoren (14, 30) zum Erfassen einer durch einen Aufprall eines Objekts (10) auf das Fahrzeug (12) bewirkten Deformation und
    - Mitteln (16) zum Auswerten der von den Sensoren (14, 30) gelieferten Signale, so dass Informationen über die Charakteristik des Aufpralls geliefert werden können, und
    - wobei die Mittel (16) zum Auswerten unter Berücksichtigung von Zeitinformation, die von Sensoren (14, 30) erfasst wird, eine Intrusionsgeschwindigkeit des Objekts (10) ermitteln können,

    **dadurch gekennzeichnet,**

    - **dass** die Mittel (16) zum Auswerten aus der bewirkten Deformation eine Deformationsarbeit ermitteln können,
    - **dass** unter Berücksichtigung der Deformationsarbeit und der Intrusionsgeschwindigkeit ein die Masse des Objekts (10) kennzeichnender Parameter ermittelt wird.

2.  Fußgängerschutzsystem nach Anspruch 1,
    **dadurch gekennzeichnet,**
    **dass** die Mittel (16) zum Auswerten die Deformationsarbeit auf der Grundlage einer gespeicherten Tabelle und/oder Berechnung ermitteln.

3.  Fußgängerschutzsystem nach Anspruch 1 oder 2,
    **dadurch gekennzeichnet,**
    **dass** der die Masse des Objekts (10) kennzeichnende Parameter ($m_0$) nach der Beziehung

$$m_0 \ = \ k \cdot \frac{W_{Def}}{v_0^2}$$

berechenbar ist, wobei

$m_0$ : Masse,
$W_{Def}$ : Deformationsarbeit,
$v_0$ : Intrusionsgeschwindigkeit, beim ersten Kontakt zu einem Zeitpunkt $t_0$,
$k$ : Konstante.

**4.** Fußgängerschutzsystem nach einem der vorhergehenden Ansprüche,
**dadurch gekennzeichnet,**
**dass** aus dem die Masse des Objekts (10) kennzeichnenden Parameter ($m_0$) eine effektive Masse ($m_{eff}$) nach der Beziehung

$$m_{eff} = f_{dyn} \cdot m_0$$

berechenbar ist, wobei

$m_0$ : Masse,
$m_{eff}$ : effektive Masse,
$f_{dyn}$ : Dynamikfaktor.

**5.** Fußgängerschutzsystem nach einem der vorhergehenden Ansprüche,
**dadurch gekennzeichnet,**

- **dass** bei einer Masse $m_0$ beziehungsweise einer effektiven Masse ($m_{eff}$) zwischen ca. 5 kg und 20 kg ein Aktivieren eines Fußgängerschutzes möglich ist und
- **dass** bei einer Masse ($m_0$) beziehungsweise einer effektiven Masse ($m_{eff}$) kleiner als ca. 5 kg und größer als 20 kg ein Aktivieren eines Fußgängerschutzes verhindert wird.

**6.** Fußgängerschutzsystem nach einem der vorhergehenden Ansprüche,
**dadurch gekennzeichnet,**

- **dass** bei einer Intrusionsgeschwindigkeit zwischen ca. 20 km/h und 60 km/h ein Aktivieren eines Fußgängerschutzes möglich ist und
- **dass** bei einer Intrusionsgeschwindigkeit kleiner als ca. 20 km/h und größer als 60 km/h ein Aktivieren eines Fußgängerschutzes verhindert wird.

**7.** Fußgängerschutzsystem nach einem der vorangehenden Ansprüche,
**dadurch gekennzeichnet,**
**dass** Sensoren (14, 30) mit mehreren sensitiven Bereichen (18) vorgesehen sind, die sich an verschiedenen Orten des Fahrzeugs (12), insbesondere der Fahrzeugfront, befinden.

**8.** Fußgängerschutzsystem nach einem der vorangehenden Ansprüche,
**dadurch gekennzeichnet,**
**dass** die Sensoren (14, 30) beziehungsweise die sensitiven Bereiche (18) der Sensoren (14, 30) entlang einem Stoßfänger (20) des Fahrzeugs (12) angeordnet sind.

**9.** Fußgängerschutzsystem nach einem der vorangehenden Ansprüche,
**dadurch gekennzeichnet,**
**dass** die einem Sensor (14, 30) zugehörigen sensitiven Bereiche (18) in regelmäßigen Abständen entlang einem Stoßfänger (20) des Fahrzeugs (12) angeordnet sind.

**10.** Fußgängerschutzsystem nach einem der vorangehenden Ansprüche,
**dadurch gekennzeichnet,**
**dass** sensitive Bereiche (18) benachbarter Sensoren (14a, 14b, 14c, 14d) zueinander versetzt beziehungsweise nebeneinander angeordnet sind, so dass beim Aufprall eines Objekts (10) von benachbarten Sensoren (14a, 14b, 14c, 14d) Signale mit unterschiedlichen Intensitäten geliefert werden.

**11.** Fußgängerschutzsystem nach einem der vorangehenden Ansprüche,
**dadurch gekennzeichnet,**

- **dass** die Sensoren (14) optische Fasersensoren (30) sind, an deren einem Ende (24) Licht eingekoppelt werden kann und an deren anderem Ende (26) die Intensität von austretendem Licht gemessen werden kann,
- **dass** die sensitiven Bereiche (18) der Sensoren (14) durch Veränderung der Oberfläche der optischen Fasersensoren (30) geschaffen sind und

- **dass** in Abhängigkeit der Deformation der sensitiven Bereiche (18) mehr oder weniger Licht aus den sensitiven Bereichen (18) ausgekoppelt werden kann, so dass die gemessene Intensität von austretendem Licht als Maß für die Deformation der sensitiven Bereiche (18) verwendet werden kann.

**12.** Verfahren zum Aktivieren eines Fußgängerschutzes in Abhängigkeit eines Aufpralls, bei dem

- mehrere an einem Fahrzeug angeordnete Sensoren (14, 30) zum Erfassen einer durch einen Aufprall eines Objekts (10) auf das Fahrzeug bewirkten Deformation verwendet werden und
- aus von den Sensoren (14, 30) gelieferten Signalen Informationen über die Charakteristik des Aufpralls geliefert werden,
- unter Berücksichtigung von Zeitinformation, die von Sensoren (14, 30) erfasst wird, eine Intrusionsgeschwindigkeit des Objekts (10) ermittelt wird,

**dadurch gekennzeichnet,**

- **dass** eine Deformationsarbeit ermittelt wird,
- **dass** unter Berücksichtigung der Deformationsarbeit und der Intrusionsgeschwindigkeit ein die Masse des Objekts (10) kennzeichnender Parameter ermittelt wird.

**13.** Verfahren nach Anspruch 12,
**dadurch gekennzeichnet,**
**dass** das Ermitteln der Deformationsarbeit auf der Grundlage einer gespeicherten Tabelle und/oder Berechnung erfolgt.

**14.** Verfahren nach Anspruch 12 oder 13,
**dadurch gekennzeichnet,**
**dass** der die Masse des Objekts kennzeichnende Parameter nach der Beziehung

$$m_0 \doteq k \cdot \frac{W_{Def}}{v_0^2}$$

berechnet wird, wobei

$m_0$ : Masse,
$W_{Def}$ : Deformationsarbeit,
$v_0$ : Intrusionsgeschwindigkeit, beim ersten Kontakt zu einem Zeitpunkt $t_0$.
$k$ : Konstante.

**15.** Verfahren nach einem der Ansprüche 12 bis 14,
**dadurch gekennzeichnet,**
**dass** aus dem die Masse des Objekts kennzeichnenden Parameter eine effektive Masse nach der Beziehung

$$m_{eff} = f_{dyn} \cdot m_0$$

berechnet wird, wobei

$m_0$ : Masse,
$m_{eff}$ : effektive Masse,
$f_{dyn}$ : Dynamikfaktor.

**16.** Verfahren nach einem der Ansprüche 12 bis 15,

**dadurch gekennzeichnet,**

- **dass** bei einer Masse $m_0$ beziehungsweise einer effektiven Masse $m_{eff}$ zwischen ca. 5 kg und 20 kg ein Aktivieren eines Fußgängerschutzes möglich ist und
- **dass** bei einer Masse $m_0$ beziehungsweise einer effektiven Masse $m_{eff}$ kleiner als ca. 5 kg und größer als 20 kg ein Aktivieren eines Fußgängerschutzes verhindert wird.

17. Verfahren nach einem der Ansprüche 12 bis 16,
**dadurch gekennzeichnet,**

- **dass** bei einer Intrusionsgeschwindigkeit zwischen ca. 20 km/h und 60 km/h ein Aktivieren eines Fußgängerschutzes möglich ist und
- **dass** bei einer Intrusionsgeschwindigkeit kleiner als ca. 20 km/h und größer als 60 km/h ein Aktivieren eines Fußgängerschutzes verhindert wird.

18. Verfahren nach einem der Ansprüche 12 bis 17,
**dadurch gekennzeichnet,**
**dass** Sensoren (14, 30) mit mehreren sensitiven Bereichen (18) verwendet werden, die sich an verschiedenen Orten des Fahrzeugs (12), insbesondere der Fahrzeugfront, befinden.

19. Verfahren nach einem der Ansprüche 12 bis 18,
**dadurch gekennzeichnet,**
**dass** die Sensoren (14, 30) beziehungsweise die sensitiven Bereiche (18) der Sensoren (14, 30) entlang einem Stoßfänger (20) des Fahrzeugs (12) angeordnet sind.

20. Verfahren nach einem der Ansprüche 12 bis 19,
**dadurch gekennzeichnet,**
**dass** die einem Sensor (14, 30) zugehörigen sensitiven Bereiche (18) in regelmäßigen Abständen entlang einem Stoßfänger (20) des Fahrzeugs (12) angeordnet sind.

21. Verfahren nach einem der Ansprüche 12 bis 20,
**dadurch gekennzeichnet,**
**dass** sensitive Bereiche (18) benachbarter Sensoren (14a, 14b, 14c, 14d) zueinander versetzt beziehungsweise nebeneinander angeordnet sind, so dass beim Aufprall eines Objekts (10) von benachbarten Sensoren (14a, 14b, 14c, 14d) Signale mit unterschiedlichen Intensitäten geliefert werden.

22. Verfahren nach einem der Ansprüche 12 bis 21,
**dadurch gekennzeichnet,**

- **dass** die Sensoren (14) optische Fasersensoren (30) sind, an deren einem Ende (24) Licht eingekoppelt wird und an deren anderem Ende (26) die Intensität von austretendem Licht gemessen wird,
- **dass** die sensitiven Bereiche (18) der Sensoren (14) durch Veränderung der Oberfläche der optischen Fasersensoren (30) geschaffen sind und
- **dass** in Abhängigkeit der Deformation der sensitiven Bereiche (18) mehr oder weniger Licht aus den sensitiven Bereichen (18) ausgekoppelt werden kann, so dass die gemessene Intensität von austretendem Licht als Maß für die Deformation der sensitiven Bereiche (18) verwendet wird.

**Claims**

1. Pedestrian protection system having

- a plurality of sensors (14, 30) which are arranged on a vehicle (12) and have the purpose of sensing a deformation brought about by an impact of an object (10) against the vehicle (12) and
- means (16) for evaluating the signals supplied by the sensors (14, 30) so that information can be supplied about the characteristic of the impact, the evaluation means (16) being able to determine an intrusion speed of the object (10) taking into account time information is sensed by sensors (14, 30), and **characterized in that**
- the evaluation means (16) can determine a deformation work from the effected deformation,

- a parameter which characterizes the mass of the object (10) can be determined taking into account the deformation work and the intrusion speed.

2. Pedestrian protection system according to Claim 1, **characterized in that** the evaluation means (16) determine the deformation work on the basis of a stored table and/or calculation.

3. Pedestrian protection system according to Claim 1 or 2, **characterized in that** the parameter ($m_0$) which characterizes the mass of the object (10) can be calculated according to the relationship

$$m_0 = k \cdot \frac{W_{Def}}{v_0^2}$$

wherein

$m_0$ : mass,
$W_{Def}$ : deformation work,
$v_0$ : intrusion speed at first contact at a time $t_0$,
$k$ : constant.

4. Pedestrian protection system according to one of the preceding claims, **characterized in that** an effective mass ($m_{eff}$) can be calculated from the parameter ($m_0$) which characterizes the mass of the object (10), in accordance with the relationship

$$m_{eff} = f_{dyn} \cdot m_0$$

wherein

$m_0$ : mass,
$m_{eff}$ : effective mass,
$f_{dyn}$ : dynamic factor.

5. Pedestrian protection system according to one of the preceding claims, **characterized in that**

- it is possible to activate a pedestrian protection means given a mass $m_0$ or an effective mass ($m_{eff}$) between approximately 5 kg and 20 kg, and
- a pedestrian protection means is prevented from being activated given a mass ($m_0$) or an effective mass ($m_{eff}$) of less than approximately 5 kg and more than 20 kg.

6. Pedestrian protection system according to one of the preceding claims, **characterized in that**

- it is possible to activate a pedestian protection means given an intrusion speed between approximately 20 km/h and 60 km/h, and
- a pedestrian protection means is prevented from being activated given an intrusion speed of less than approximately 20 km/h and more than 60 km/h.

7. Pedestrian protection system according to one of the preceding claims, **characterized in that** sensors (14, 30) are provided with a plurality of sensitive areas (18) which are situated at different locations on the vehicle (12), in particular the front of the vehicle.

8. Pedestrian protection system according to one of the preceding claims, **characterized in that** the sensors (14, 30) or the sensitive areas (18) of the sensors (14, 30) are arranged along a bumper (20) of the vehicle (12).

9. Pedestrian protection system according to one of the preceding claims, **characterized in that** the sensitive areas (18) which are associated with a sensor (14, 30) are arranged at regular intervals along a bumper (20) of the vehicle (12).

**10.** Pedestrian protection system according to one of the preceding claims, **characterized in that** sensitive areas (18) of adjacent sensors (14a, 14b, 14c, 14d) are arranged offset with respect to one another or next to one another so that when there is an impact of an object (10), signals with different intensities are supplied by adjacent sensors (14a, 14b, 14c, 14d).

**11.** Pedestrian protection system according to one of the preceding claims, **characterized in that**

- the sensors (14) are optical fibre sensors (30), at one end (24) of which it is possible to input light and at the other end (26) of which it is possible to measure the intensity of emerging light,
- the sensitive areas (18) of the sensors (14) are produced by changing the surface of the optical fibre sensors (30), and
- more or less light can be extracted from the sensitive areas (18) as a function of the deformation of the sensitive areas (18) so that the measured intensity of emerging light can be used as a measure of the deformation of the sensitive areas (18).

**12.** Method for activating a pedestrian protection as a function of an impact, in which

- a plurality of sensors (14, 30) which are arranged on a vehicle to sense a deformation which is brought about by an impact of an object (10) against the vehicle, and
- information about the characteristic of the impact is supplied from signals supplied by the sensors (14, 30), an intrusion speed of the object (10) being determined taking into account the time information which is sensed by sensors (14, 30), **characterized in that**
- a deformation work is determined,
- a parameter which characterizes the mass of the object (10) is determined taking into account the deformation work and the intrusion speed.

**13.** Method according to Claim 12, **characterized in that** the deformation work is determined on the basis of a stored table and/or calculation.

**14.** Method according to Claim 12 or 13, **characterized in that** the parameter which characterizes the mass of the object is calculated according to the relationship

$$m_0 = k \cdot \frac{W_{Def}}{v_0^2}$$

wherein

$m_0$ : mass,
$W_{Def}$ : deformation work,
$v_0$ : intrusion speed at first contact at a time $t_0$,
$k$ : constant.

**15.** Method according to one of Claims 12 to 14, **characterized in that** an effective mass is calculated from the parameter which characterizes the mass of the object, according to the relationship

$$m_{eff} = f_{dyn} \cdot m_0$$

wherein

$m_0$ : mass
$m_{eff}$ : effective mass
$f_{dyn}$ : dynamic factor.

**16.** Method according to one of Claims 12 to 15, **characterized in that**

- it is possible to activate a pedestrian protection means given a mass $m_0$ or an effective mass $m_{eff}$ between approximately 5 kg and 20 kg, and
- a pedestrian protection means is prevented from being activated given a mass $m_0$ or an effective mass $m_{eff}$ of less than approximately 5 kg and more than 20 kg.

**17.** Method according to one of Claims 12 to 16, **characterized in that**

- it is possible to activate a pedestrian protection means given an intrusion speed between approximately 20 km/h and 60 km/h, and
- a pedestrian protection means is prevented from being activated given an intrusion speed of less than approximately 20 km/h and more than 60 km/h.

**18.** Method according to one of Claims 12 to 17, **characterized in that** sensors (14, 30) are used which have a plurality of sensitive areas (18) and are situated at different locations on the vehicle (12), in particular the front of the vehicle.

**19.** Method according to one of Claims 12 to 18, **characterized in that** the sensors (14, 30) or the sensitive areas (18) of the sensors (14, 30) are arranged along a bumper (20) of the vehicle (12).

**20.** Method according to one of Claims 12 to 19, **characterized in that** the sensitive areas (18) which are associated with a sensor (14, 30) are arranged at regular intervals along a bumper (20) of the vehicle (12).

**21.** Method according to one of Claims 12 to 20, **characterized in that** sensitive areas (18) of adjacent sensors (14a, 14b, 14c, 14d) are arranged offset with respect to one another or next to one another so that when there is an impact of an object (10), signals with different intensities can be supplied by adjacent sensors (14a, 14b, 14c, 14d).

**22.** Method according to one of Claims 12 to 21, **characterized in that**

- the sensors (14) are optical fibre sensors (30), at one end of which (24) light is input, and at the other end (26) of which the intensity of emerging light is measured,
- the sensitive areas (18) of the sensors (14) are produced by changing the surface of the optical fibre sensors (30), and
- more or less light can be extracted from the sensitive areas (18) as a function of the deformation of the sensitive areas (18) so that the measured intensity of emerging light is used as a measure for the deformation of the sensitive areas (18).

**Revendications**

**1.** Système de protection pour piétons comprenant

- plusieurs capteurs (14, 30) disposés sur un véhicule (12) pour détecter une déformation provoquée par un impact d'un objet (10) sur le véhicule (12) et
- des moyens (16) pour interpréter les signaux délivrés par les capteurs (14, 30) de manière à pouvoir fournir des informations relatives à la caractéristique de l'impact et

les moyens (16) d'interprétation pouvant déterminer une vitesse d'intrusion de l'objet (10) en tenant compte d'une information de temps qui est détectée par les capteurs (14, 30),
**caractérisé en ce**

- **que** les moyens (16) d'interprétation peuvent déterminer un travail de déformation à partir de la déformation provoquée,

- **qu'**un paramètre qui caractérise la masse de l'objet (10) est déterminé en tenant compte du travail de déformation et de la vitesse d'intrusion.

2. Système de protection pour piétons selon la revendication 1, **caractérisé en ce que** les moyens (16) d'interprétation déterminent le travail de déformation en se basant sur un tableau et/ou un calcul enregistré.

3. Système de protection pour piétons selon la revendication 1 ou 2, **caractérisé en ce que** le paramètre ($m_0$) caractérisant la masse de l'objet (10) peut être calculé d'après l'équation

$$m_o = k \cdot \frac{W_{Déf}}{v_o^2}$$

où :

$m_o$ désigne la masse,
$W_{Déf}$ désigne le travail de déformation,
$v_o$ désigne la vitesse d'intrusion lors du premier contact à un instant $t_0$,
k est une constante.

4. Système de protection pour piétons selon l'une des revendications précédentes, **caractérisé en ce qu'**une masse effective ($m_{eff}$) peut être calculée à partir du paramètre ($m_o$) caractérisant la masse de l'objet (10) d'après l'équation

$$m_{eff} = f_{dyn} \cdot m_o$$

où :

$m_o$ désigne la masse,
$m_{eff}$ désigne la masse effective,
$f_{dyn}$ désigne le facteur dynamique.

5. Système de protection pour piétons selon l'une des revendications précédentes, **caractérisé en ce**

- **qu'**il est possible d'activer un dispositif de protection pour piétons avec une masse $m_o$ ou une masse effective ($m_{eff}$) comprise entre environ 5 kg et 20 kg et
- **qu'**une activation d'un dispositif de protection pour piétons est empêchée avec une masse ($m_o$) ou une masse effective ($m_{eff}$) inférieure à environ 5 kg et supérieure à 20 kg.

6. Système de protection pour piétons selon l'une des revendications précédentes, **caractérisé en ce**

- **qu'**il est possible d'activer un dispositif de protection pour piétons avec une vitesse d'intrusion comprise entre environ 20 km/h et 60 km/h et
- **qu'**une activation d'un dispositif de protection pour piétons est empêchée avec une vitesse d'intrusion inférieure à environ 20 km/h et supérieure à 60 km/h.

7. Système de protection pour piétons selon l'une des revendications précédentes, **caractérisé en ce que** les capteurs (14, 30) sont prévus avec plusieurs zones sensibles (18) qui se trouvent en différents endroits du véhicule (12), notamment de l'avant du véhicule.

8. Système de protection pour piétons selon l'une des revendications précédentes, **caractérisé en ce que** les capteurs (14, 30) ou les zones sensibles (18) des capteurs (14, 30) sont disposés le long d'un pare-chocs (20) du véhicule (12).

9. Système de protection pour piétons selon l'une des revendications précédentes, **caractérisé en ce que** les zones sensibles (18) associées à un capteur (14, 30) sont disposées à intervalles réguliers le long d'un pare-chocs (20) du véhicule (12).

10. Système de protection pour piétons selon l'une des revendications précédentes, **caractérisé en ce que** les zones sensibles (18) de capteurs voisins (14a, 14b, 14c, 14d) sont disposées décalées les unes par rapport aux autres ou les unes à côté des autres de telle sorte qu'en cas d'impact d'un objet (10), des signaux d'intensités différentes soient délivrés par les capteurs voisins (14a, 14b, 14c, 14d).

11. Système de protection pour piétons selon l'une des revendications précédentes, **caractérisé en ce**

- **que** les capteurs (14) sont des capteurs optiques à fibre (30) à l'une des extrémités (24) desquels peut être injectée de la lumière et à l'autre extrémité (26) desquels l'intensité de la lumière sortante peut être mesurée,
- **que** les zones sensibles (18) des capteurs (14) sont réalisées en modifiant la surface des capteurs optiques à fibre (30) et
- **que** plus ou moins de lumière peut être découplée des zones sensibles (18) en fonction de la déformation des zones sensibles (18) de manière à ce que l'intensité mesurée de la lumière sortante puisse être utilisée comme mesure pour la déformation des zones sensibles (18).

12. Procédé pour activer un dispositif de protection pour piétons en fonction d'un impact, avec lequel

- plusieurs capteurs (14, 30) disposés sur un véhicule sont utilisés pour détecter une déformation provoquée par un impact d'un objet (10) sur le véhicule et
- des informations relatives à la caractéristique de l'impact sont fournies à partir des signaux délivrés par les capteurs (14, 30) et
- une vitesse d'intrusion de l'objet (10) est déterminée en tenant compte d'une information de temps qui est détectée par les capteurs (14, 30),

**caractérisé en ce**

- **qu'**un travail de déformation est déterminé,
- **qu'**un paramètre qui caractérise la masse de l'objet (10) est déterminé en tenant compte du travail de déformation et de la vitesse d'intrusion.

13. Procédé selon la revendication 12, **caractérisé en ce que** la détermination du travail de déformation s'effectue en se basant sur un tableau et/ou un calcul enregistré.

14. Procédé selon la revendication 12 ou 13, **caractérisé en ce que** le paramètre caractérisant la masse de l'objet peut être calculé d'après l'équation

$$m_o = k \cdot \frac{W_{Déf}}{v_o^2}$$

où :

$m_o$ désigne la masse,
$W_{Déf}$ désigne le travail de déformation,
$V_o$ désigne la vitesse d'intrusion lors du premier contact à un instant $t_0$,
$k$ est une constante.

15. Procédé selon l'une des revendications 12 à 14, **caractérisé en ce que** qu'une masse effective peut être calculée à partir du paramètre caractérisant la masse de l'objet d'après l'équation

$$m_{eff} = f_{dyn} \cdot m_o$$

où :

$m_o$ désigne la masse,
$m_{eff}$ désigne la masse effective,
$f_{dyn}$ désigne le facteur dynamique.

**16.** Procédé selon l'une des revendications 12 à 15, **caractérisé en ce**

- **qu'**il est possible d'activer un dispositif de protection pour piétons avec une masse $m_o$ ou une masse effective $m_{eff}$ comprise entre environ 5 kg et 20 kg et
- **qu'**une activation d'un dispositif de protection pour piétons est empêchée avec une masse $m_o$ ou une masse effective $m_{eff}$ inférieure à environ 5 kg et supérieure à 20 kg.

**17.** Procédé selon l'une des revendications 12 à 16, **caractérisé en ce**

- **qu'**il est possible d'activer un dispositif de protection pour piétons avec une vitesse d'intrusion comprise entre environ 20 km/h et 60 km/h et
- **qu'**une activation d'un dispositif de protection pour piétons est empêchée avec une vitesse d'intrusion inférieure à environ 20 km/h et supérieure à 60 km/h.

**18.** Procédé selon l'une des revendications 12 à 17, **caractérisé en ce que** les capteurs (14, 30) sont utilisés avec plusieurs zones sensibles (18) qui se trouvent en différents endroits du véhicule (12), notamment de l'avant du véhicule.

**19.** Procédé selon l'une des revendications 12 à 18, **caractérisé en ce que** les capteurs (14, 30) ou les zones sensibles (18) des capteurs (14, 30) sont disposés le long d'un pare-chocs (20) du véhicule (12).

**20.** Procédé selon l'une des revendications 12 à 19, **caractérisé en ce que** les zones sensibles (18) associées à un capteur (14, 30) sont disposées à intervalles réguliers le long d'un pare-chocs (20) du véhicule (12).

**21.** Procédé selon l'une des revendications 12 à 20, **caractérisé en ce que** les zones sensibles (18) de capteurs voisins (14a, 14b, 14c, 14d) sont disposées décalées les unes par rapport aux autres ou les unes à côté des autres de telle sorte qu'en cas d'impact d'un objet (10), des signaux d'intensités différentes soient délivrés par les capteurs voisins (14a, 14b, 14c, 14d).

**22.** Procédé selon l'une des revendications 12 à 21, **caractérisé en ce**

- **que** les capteurs (14) sont des capteurs optiques à fibre (30) à l'une des extrémités (24) desquels est injectée de la lumière et à l'autre extrémité (26) desquels est mesurée l'intensité de la lumière sortante,
- **que** les zones sensibles (18) des capteurs (14) sont réalisées en modifiant la surface des capteurs optiques à fibre (30) et
- **que** plus ou moins de lumière peut être découplée des zones sensibles (18) en fonction de la déformation des zones sensibles (18) de manière à ce que l'intensité mesurée de la lumière sortante soit utilisée comme mesure pour la déformation des zones sensibles (18).

Fig. 1

Fig. 2

12

$v_0 \neq 0$

10

Fig. 3

12

$\Delta v = 0$

10

Fig. 4

12

$\Delta v = 0$

10

*Fig.5*

Trigger =f(T) — S01

N (Sensor) — S02

Intru. (I) Sum(3max) — S03

$v_0$ (dI/dt) — S04

Dyn. Krit. — S05

N (Haupt-Maxima) — S06

Berechnung Masse $m_0 = k * W/(v_0)^2$ — S07

Abgleich Masse $m_{eff} = m_0 * f_{dyn}$ — S08

$5 < m_{eff} < 20$ kg — S09 — Nein → nicht feuern

Ja

$20 < v_0 < 60$ km/h — S10 — Nein → nicht feuern

Ja

Bein ? — S11 — Nein → nicht feuern

Ja

anderes Objekt ? — S12 — Ja → nicht feuern

Nein

feuern

Fig. 6

$$S_2 \sim 2\,S_1 \wedge$$
$$S_3 \sim 4\,S_1$$

Fig. 7

a)

b)

c)

= aktiver Sensorbereich

EP 1 442 943 B1

Fig. 8

Fig. 9

Fig. 10

25

Fig. 11

a)

b)

c)

Fig. 12

# Fig. 13

Sensor Array **14** → Inter-Face-Einheit **52** → ECU Algorithmus incl. CAN-Interface **16** →

Leistungs-Elektronik des Aktuators **54** → Aktuator **56**

EP 1 442 943 B1